# EUROPÄISCHE PATENTANMELDUNG

(11) **EP 3 702 941 A1**
(43) Veröffentlichungstag der Anmeldung: **02.09.2020**
(21) Anmeldenummer: 19160304.2
(22) Anmeldetag: 01.03.2019
(51) Int. Cl.: G06F 17/50, G06F 16/583, G06K 9/00, G06K 9/62, G06K 9/68

(54) **VERFAHREN ZUR AUTOMATISCHEN INTERPRETATION EINES ROHRLEITUNGSSCHEMAS**

(71) Anmelder: Siemens Aktiengesellschaft, 80333 München (DE)
(72) Erfinder: Wendelberger, Klaus, 68789 St. Leon-Rot (DE)

(57) **Zusammenfassung**

Die Erfindung ist ein Verfahren zur Erkennung eines Referenzschemas (14) innerhalb eines als Großschema (10) bezeichneten Rohrleitungsschemas (10), wobei in dem Referenzschema (14) zumindest eine von diesem umfasste Komponente (12) als Basiselement (30) ausgewählt wird, wobei das Basiselement (30) in dem Großschema (10) gesucht wird und eine dabei resultierende Fundstelle einen Abschnitt des Großschemas (10) als Kandidatenschema (34) definiert, wobei das oder jedes Kandidatenschema (34) ausgehend von der jeweiligen Fundstelle weiter untersucht wird und wobei weitere Daten (36, 40), welche das Referenzschema (14) näher spezifizieren, insbesondere Expertenwissen (40), berücksichtigt werden.

## Beschreibung

Die Erfindung betrifft ein Verfahren zur automatischen Interpretation eines Rohrleitungsschemas, nämlich eines Rohrleitungsschemas in Form eines sogenannten Rohrleitungs- und Instrumentenschemas (R&I-Schema), insbesondere für verfahrenstechnische Anlagen oder Kraftwerksanlagen. Solche Rohrleitungsschemata werden in grundsätzlich an sich bekannter Art und Weise zur Projektierung einer spezifischen verfahrenstechnischen Anlage verwendet. Der Begriff Anlage umfasst auch eine Teilanlage einer größeren Anlage, zum Beispiel eine innerhalb einer größeren Anlage zum Heizen oder Kühlen bestimmte Teilanlage, sowie einen Anlagenteil, also zum Beispiel eine Mischeinrichtung.

Bei einer verfahrenstechnischen Anlage kann zwischen Primärtechnik und Sekundärtechnik unterschieden werden. Die Primärtechnik umfasst den Aufbau der Anlage aus verfahrenstechnischer oder technologischer Sicht, also die verfahrenstechnischen Komponenten der Anlage, wie z. B. Behälter, Pumpen, Ventile, Wärmetauscher, und ihre Verbindung miteinander, insbesondere Rohrleitungen. Die Sekundärtechnik ertüchtigt die Primärtechnik zum bestimmungsgemäßen Betrieb der Anlage, wobei unterschiedliche Sekundärtechniken unterschiedliche Funktionen beim Betrieb der Anlage erfüllen.

Die Planung oder Projektierung der Primärtechnik erfolgt mittels eines Anlagenplanungswerkzeugs (z. B. COMOS von Siemens) in Form eines Fließ- oder Rohrleitungsschemas (R&I-Schema) der Anlage, wobei grafische Prozessobjekte, welche Komponenten der verfahrenstechnischen Anlage repräsentieren, miteinander verknüpft werden. Die konkreten Prozessobjekte (Instanzen von Objektklassen) enthalten technische Informationen über die Parameter der von ihnen repräsentierten Komponenten, wie z. B. Rohrleitungsdurchmesser, Leistungsaufnahme von Motoren oder das Füllvolumen eines Behälters. Das R&I-Schema kann auch bereits die Sensorik und Aktorik (Messumformer und Antriebe für Stellorgane) der Anlage mit den technischen Informationen über die Sensoren und Aktoren enthalten oder die entsprechenden Informationen können in dem Anlagenplanungswerkzeug eingegeben werden.

Eine wesentliche Sekundärtechnik stellt die Automatisierung der Anlage dar, die wiederum in unterschiedliche Teilbereiche wie Automatisierungs-Software, Automatisierungs-Hardware sowie Bedienen & Beobachten unterteilt werden kann, deren Lösungen bisher oft von unterschiedlichen Fachleuten (Automatisierungs-Ingenieure, Projekteure) wie Hardware-Ingenieuren, Software-Ingenieuren, HMI- (Human Machine Interface-) Ingenieuren projektiert wurden.

Neben der Automatisierung ist die Elektrifizierung der Anlage als weitere Sekundärtechnik von Bedeutung. Alle elektrischen Anlagenkomponenten wie insbesondere die Motoren müssen mit elektrischem Strom versorgt werden. Hierzu sind die Komponenten der Elektrifizierung wie Transformatoren, Umrichter, Schaltanlagen usw. bereitzustellen.

Als weitere Sekundärtechniken sind z. B. die Gebäudetechnik oder die Telekommunikation zu nennen.

Der grundlegende Schritt bei der Planung einer prozesstechnischen Anlage ist die Erstellung eines Rohrleitungsschemas. In dem Rohrleitungsschema sind alle prozesstechnischen Komponenten der Anlage, wie Behälter, Pumpen, Lüfter, Antriebe, Sensoren usw., sowie die Rohrleitungen, über welche die Komponenten miteinander verbunden sind, dargestellt. Nach dem aktuellen Stand der Technik enthält ein solches Rohrleitungsschema bereits alle produktbezogenen Informationen über die Komponenten der Anlage. Bei den Sensoren sind dies beispielsweise Informationen, die sich auf einen Messbereichsanfang und ein Messbereichsende, eine Anschlussart (zum Beispiel Profibus, 4-20 mA verdrahtet), einen jeweiligen Hersteller und dergleichen beziehen. Bei den Rohrleitungen sind dies zum Beispiel Informationen wie Material, Durchmesser, Wandstärke usw.

In verschiedenen Normen ist festgelegt, wie Rohrleitungsschemata aufzubauen und zu verwenden sind. In der ISO 16028 (Diagrams for the chemical and petrochemical industry) sind die entsprechenden Diagramme spezifiziert und die zu verwendenden grafischen Symbole definiert. Die IEC 62424 definiert Anforderungen an Rohrleitungsschemata und den Datenaustausch zwischen Anlagenplanungstools und Engineeringtools für Automatisierungssysteme.

Im Hause der Anmelderin werden im Rahmen einer Rohrleitungsschemakonfiguration in ein Rohrleitungsschema zusätzliche betriebliche Anforderungen und Spezifikationen für die zu errichtende Anlage aufgenommen. Während das ursprüngliche Rohrleitungsschema beschreibt, aus welchen Komponenten eine prozesstechnische Anlage besteht und wie diese miteinander verbunden sind, ist im konfigurierten Rohrleitungsschema zusätzlich eine Information darüber enthalten, wie diese Anlage im manuellen Modus (Handbetrieb) und im automatischen Modus (Automatikbetrieb) zu betreiben ist. Die Konfiguration eines Rohrleitungsschemas ist die Basis für eine vollständig automatische Erstellung von Engineering-Unterlagen im Bereich der Automatisierung und Elektrifizierung.

Sowohl im Bereich des automatischen Engineerings von Anlagen der eingangs genannten Art bzgl. der Automatisierung oder deren Elektrifizierung als auch im Bereich der Anlagenplanung selbst, also bei der Erstellung eines Rohrleitungsschemas, können durch Nutzung der Möglichkeiten der Digitalisierung erhebliche Verbesserungspotenziale gehoben werden. Eine Aufgabe der vorliegenden Erfindung besteht entsprechend darin, eine Möglichkeit zur automatischen Erkennung von Strukturen in einem Rohrleitungsschema anzugeben. Ausgehend von einer solchen automatischen Erkennung von Strukturen sind im Weiteren eine automatische Auswertung und eine automatische Weiterverarbeitung möglich.

Eine Interpretation eines Rohrleitungsschemas wurde bisher stets von einem menschlichen Experten als gedankliche Tätigkeit ausgeführt. Es ist kein Stand der Technik bekannt, der eine automatische Erkennung von Strukturen in einem Rohrleitungsschema ermöglicht.

Eine Aufgabe der vorliegenden Erfindung besteht entsprechend darin, ein Verfahren anzugeben, welches eine automatische Interpretation eines Rohrleitungsschemas (R&I-Schema) ermöglicht, nämlich eine automatische Interpretation eines Rohrleitungsschemas in Form einer Identifikation einer vorgegebenen oder vorgebbaren Struktur innerhalb des Rohrleitungsschemas.

Diese Aufgabe wird mittels eines Verfahrens mit den Merkmalen des Anspruchs 1 gelöst und kommt bevorzugt für verfahrenstechnische Anlagen oder Kraftwerksanlagen in Betracht.

Dazu ist zur automatischen Identifikation einer vorgegebenen oder vorgebbaren Struktur innerhalb eines Rohrleitungsschemas Folgendes vorgesehen, wobei das Rohrleitungsschema und die zu erkennende Struktur Komponenten eines Rohrleitungsschemas, zum Beispiel Pumpen, Ventile oder dergleichen, umfassen und wobei im Folgenden das Rohrleitungsschema als Großschema und die zu identifizierende Struktur als Referenzschema bezeichnet werden:
In dem Referenzschema wird zumindest eine von dem Referenzschema umfasste Komponente als Basiselement ausgewählt, zum Beispiel eine Pumpe.

Die Auswahl kann durch einen Anwender des Verfahrens erfolgen. Die Auswahl kann alternativ auch automatisch erfolgen. Eine automatische Auswahl erfolgt beispielsweise anhand einer automatisch auswertbaren Liste, welche besonders charakteristische und/oder eher selten in einem Rohrleitungsschema vorkommende Komponenten umfasst. Eine solche Liste ist bevorzugt sortiert, nämlich derart sortiert, dass besondere charakteristische Komponenten und/oder selten vorkommende Komponenten in der Liste vorne stehen. Auf Basis einer solchen Liste, insbesondere einer sortierten Liste, kann die erste Komponente der Liste, welche sich auch in dem Referenzschema findet, automatisch als Basiselement ausgewählt werden.

Nach der Auswahl wird das Basiselement in dem Großschema gesucht.

Bei der Suche in dem Großschema wird bevorzugt ein Typ oder eine Typkategorie des Basiselements berücksichtigt. Dabei kann optional, zum Beispiel durch Berücksichtigung einer Typkategorie oder dergleichen, eine gewisse Unschärfe implementiert sein, welche gewährleistet, dass zum Beispiel bei einer als Basiselement fungierenden Pumpe in dem Großschema jede Art von Pumpe gefunden wird.

Grundsätzlich kann als Basiselement auch eine Kombination von Komponenten, welche das Referenzschema umfasst, fungieren. Dann ist die Suche in dem Großschema spezifischer, wenn zum Beispiel nach einer Pumpe mit einem parallel zu der Pumpe angeordneten Regelventil gesucht wird. Eine solche Zusammenfassung mehrerer von dem Referenzschema umfasster Komponenten zu einem Basiselement kann bei dem hier vorgeschlagenen Verfahren bereits anfänglich oder alternativ auch im Zuge des Verfahrens erfolgen. Bei einer bereits anfänglichen Zusammenfassung mehrerer Komponenten zu einem Basiselement ist die Suche in dem Großschema bereits anfänglich vergleichsweise konkret. Jedenfalls ist zu erwarten, dass sich mittels eines solchen Basiselements weniger näher zu untersuchende Abschnitte in dem Großschema ergeben, als mit einem Basiselement in Form von genau einer Komponente. Bei einer Zusammenfassung mehrerer Komponenten im Zuge des Verfahrens wird ein zu untersuchender Abschnitt in dem Großschema immer genauer mit dem Referenzschema vergleichbar. Das Basiselement "wächst" dabei gewissermaßen, indem sukzessive weitere Komponenten zu dem Basiselement hinzugenommen werden und nach jeder Hinzunahme geprüft wird, ob ein solches (vergrößertes) Basiselement Bestandteil des Großschemas ist. Ein auf einem solchen "wachsenden" Basiselement basierendes Verfahren kann als rekursive Implementation des Verfahrens aufgefasst werden.

Ausgehend von der oder jeder Fundstelle des Basiselements in dem Großschema wird die Fundstelle weiter untersucht. Eine Fundstelle definiert einen Teil des Großschemas als Kandidatenschema. Das Kandidatenschema umfasst anfänglich zumindest das Basiselement im Großschema. Der Umfang der von dem Kandidatenschema umfassten Komponenten nimmt im Laufe des Verfahrens je nach Umfang des Referenzschemas zu.

Bei der weiteren Untersuchung einer Fundstelle und des zu der Fundstelle gehörigen Kandidatenschemas (bei mehreren Fundstellen erfolgt deren Betrachtung nacheinander) werden weitere Daten, welche das Referenzschema näher spezifizieren, zu den Daten des Basiselements hinzugenommen. Ein Beispiel für solche weiteren Daten ist zumindest ein mit dem Basiselement verknüpfter Datensatz, welcher zumindest eine weitere von dem Referenzschema umfasste Komponente, insbesondere eine mit dem Basiselement verknüpfte, zusammenwirkende und/oder verbundene Komponente, spezifiziert. Ein weiteres Beispiel für solche weiteren Daten ist in automatisch auswertbarer Form vorliegendes Expertenwissen, zum Beispiel Expertenwissen in Form von zumindest einer automatisch auswertbaren/anwendbaren Regel.

Mittels eines weiteren Datensatzes kann zum Beispiel spezifiziert werden, dass die als Basiselement ausgewählte Komponente, zum Beispiel eine Pumpe, mit einer anderen Komponente des Referenzschemas verknüpft ist, zum Beispiel mit einem Regelventil. Der Datensatz spezifiziert optional auch die Art der Verknüpfung, zum Beispiel einen Parallelzweig zu der Pumpe, in welchem sich das Regelventil befindet. Ein solcher Datensatz kann - je nach Betrachtungsweise - auch Teil derjenigen Daten sein, welche das Basiselement spezifizieren. Der Datensatz ergänzt gewissermaßen das Basiselement und bei einer sukzessiven Ergänzung des Basiselements resultiert nach und nach ein Basiselement, welches schließlich alle Komponenten des Referenzschemas umfassen kann (rekursives Verfahren). Bevorzugt wird bei einem solchen sukzessiv erweiterten Basiselement dieses in dem Großschema jeweils in einem zuvor identifizierten Kandidatenschema oder im Umfeld eines zuvor identifizierten Kandidatenschemas gesucht, insbesondere am Ort der ersten Fundstelle des Basiselements oder in der Umgebung der ersten Fundstelle des Basiselements. Dann braucht nicht stets erneut das gesamte Großschema abgesucht werden, so dass die Suche schneller ausgeführt wird.

Die Untersuchung des Großschemas an einer Fundstelle, also in Bezug auf ein dortiges Kandidatenschema, ist beendet, wenn ein vorgegebenes oder vorgebbares Maß an Übereinstimmung erreicht ist oder nicht erreicht wird. Die Suche in dem Großschema ist insgesamt beendet, wenn alle Fundstellen des Basiselements im Großschema berücksichtigt wurden.

Ein wesentlicher Vorteil der vorliegenden Erfindung besteht darin, dass in dem Großschema - und damit in jedem beliebigen Großschema sowie in einer Mehrzahl von Großschemata - das jeweilige Referenzschema gesucht und im Erfolgsfall identifiziert werden kann. Auf diese Weise ist eine Funktion eines Großschemas schnell erfassbar und eine Mehrzahl von Großschemata kann zum Beispiel automatisch qualifiziert werden, etwa in einer Form wie "umfasst xyz-Funktionalität", wobei "xyz" ein Platzhalter für die Funktionalität eines jeweiligen Referenzschemas ist und sich ein konkreter Wert, insbesondere ein konkreter Text, für einen solchen Platzhalter zum Beispiel direkt anhand des jeweiligen Referenzschemas ergibt.

Für die weitere Beschreibung gilt zur Vermeidung unnötiger Wiederholungen, dass Merkmale und Details, die im Zusammenhang mit dem genannten Verfahren zur Identifikation einer vorgegebenen Struktur innerhalb eines Rohrleitungsschemas sowie eventueller Ausgestaltungen beschrieben sind, selbstverständlich auch im Zusammenhang mit und im Hinblick auf eine zur Durchführung des Verfahrens eingerichtete Vorrichtung und umgekehrt gelten. Dementsprechend kann eine solche Vorrichtung auch durch Mittel zur Ausführung von im Rahmen des Verfahrens ausgeführten Verfahrensschritten fortgebildet sein. Folglich gelten Merkmale und Details, die im Zusammenhang mit dem genannten Verfahren und eventueller Ausgestaltungen beschrieben sind, auch im Zusammenhang mit und im Hinblick auf die zur Durchführung des Verfahrens bestimmte Vorrichtung, so dass bezüglich der Offenbarung zu den einzelnen Aspekten der Erfindung stets wechselseitig Bezug genommen wird bzw. werden kann.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer speziellen Ausführungsform des Verfahrens wird Expertenwissen in Form von zumindest einer automatisch auswertbaren Regel, nämlich zumindest einer im Folgenden als Strafregel bezeichneten Regel berücksichtigt. Jede Strafregel sieht Strafpunkte vor, welche einem Strafpunktekonto (welches in Form einer von dem Computerprogramm verwendeten Variable implementiert ist) zugeschlagen werden, wenn sich bei einer Auswertung der Strafregel ergibt, dass eine durch die Strafregel definierte Bedingung erfüllt ist. Mittels einer solchen Bedingung kann zum Beispiel berücksichtigt werden, wenn eine von dem Referenzschema umfasste Komponente in dem Großschema an der entsprechenden Stelle fehlt. Eine jeweilige Relevanz eines Fehlens oder dergleichen einer Komponente wird mittels unterschiedlicher Strafpunkte abgebildet. Eine für die Funktion irrelevante Messstelle ist mit einer nur geringen "Strafe" oder gar keiner Strafe assoziiert. Das Fehlen einer für die Funktion wesentlichen Komponente oder eine zusätzliche Komponente, welche die Funktion maßgeblich verändert, ist mit einer hohen Strafe assoziiert. Die Untersuchung in Bezug auf genau ein Kandidatenschema ist beendet, wenn das Strafpunktekonto einen vorgegebenen oder vorgebbaren Wert erreicht oder überschreitet. Die Berücksichtigung von Expertenwissen, nämlich Expertenwissen in Bezug auf eine Relevanz einer Komponente und/oder in Bezug auf eine Relevanz einer Position einer Komponente für die Funktion eines Abschnitts eines Rohrleitungsschemas, in Form von zumindest einer Strafregel und einem Strafpunktekonto ist eine vergleichsweise einfache oder höchst effiziente Möglichkeit, welche einen Vergleich des Referenzschemas mit Ausschnitten des Großschemas nicht nur in Bezug auf Identität, sondern auch auf funktionale Äquivalenz oder jedenfalls "ausreichende Ähnlichkeit" erlaubt.

Die oben genannte Aufgabe wird auch mittels eines Computers oder eines ggf. verteilten Computersystems gelöst, der bzw. das nach dem Verfahren wie hier und im Folgenden beschrieben arbeitet und dazu Mittel zur Durchführung des Verfahrens umfasst. Das Verfahren ist zur automatischen Ausführung in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Computer bzw. Computersystem, in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Der Vorteil der Erfindung und ihrer Ausgestaltungen besteht damit insbesondere auch darin, dass nach dem hier vorgeschlagenen Verfahren sowie mittels eines nach dem Verfahren arbeiteten Computerprogramms automatisch aus einem Rohrleitungsschema zum Beispiel erkannt werden kann, um welchen Typ einer Anlage (bzw. Teilanlage) es sich handelt (z.B. Kraftwerk, Papierfabrik, Wasseraufbereitungetc.), woraus dann zum Beispiel bestimmt werden kann, wie eine solche Anlage zu betreiben ist, ob es sich um eine Standardkonfiguration einer derartigen Anlage handelt, oder ob es hier spezielle Anlagenstrukturen gibt, und wo die spezifische Anlage von Standardanlagen abweicht.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen.

Es zeigen
- FIG 1: ein Rohrleitungsschema (Großschema),
- FIG 2: eine in einem Rohrleitungsschema zu erkennende Struktur (Referenzschema),
- FIG 3: ein Computersystem mit einem davon ausgeführten Computerprogramm zur Erkennung eines Referenzschemas in einem Großschema,
- FIG 4: einen Vergleich von Daten des Referenzschemas mit Daten des Großschemas und
- FIG 5: eine schematisch vereinfachte Darstellung des Computerprogramms aus FIG 3.

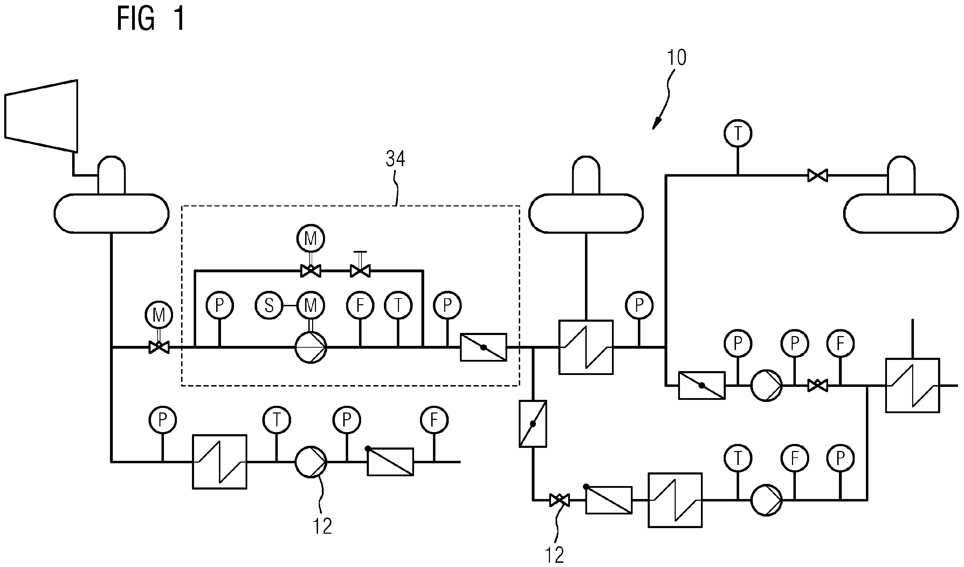

FIG 1 zeigt beispielhaft ein hier und im Folgenden im Interesse einer besseren Lesbarkeit der Beschreibung als Rohrleitungsschema 10 bezeichnetes sogenanntes R&I-Schema 10 (Rohrleitungs- und Instrumentenschema). Das Rohrleitungsschema 10 umfasst in an sich bekannter Art und Weise verschiedene Komponenten 12, zum Beispiel Pumpen, Ventile und dergleichen. Die Komponenten 12 sind mittels Rohrleitungen des Rohrleitungsschemas 10 miteinander verbunden.

Das in FIG 1 gezeigte Rohrleitungsschema 10 ist im Vergleich zu einem Rohrleitungsschema beispielsweise für eine Kraftwerksanlage oder dergleichen eher als ein Rohrleitungsschema 10 mit minimalem Umfang anzusehen. Für die Erläuterung der hier vorgeschlagenen Neuerung ist ein Rohrleitungsschema 10 mit einem eher geringen Umfang davon umfasster Komponenten 12 gleichwohl verwendbar. Es ist aber stets im Blick zu behalten, dass ein Rohrleitungsschema 10 oftmals einen gegenüber dem in FIG 1 gezeigten Umfang erheblich größeren Umfang hat und entsprechend eine weitaus größere Vielzahl von Komponenten 12 und Verbindungen (Rohrleitungen) zwischen den Komponenten 12 umfasst.

Als Komponenten 12 des Rohrleitungsschemas 10 sind - mit den bei Rohrleitungsschemata 10 üblichen Symbolen - eine Turbine, Wärmetauscher, Pumpen, Ventile und so weiter gezeigt. Im Interesse eines Erhalts einer Übersichtlichkeit der Darstellungen sind nur einzelne Komponenten 12 bezeichnet.

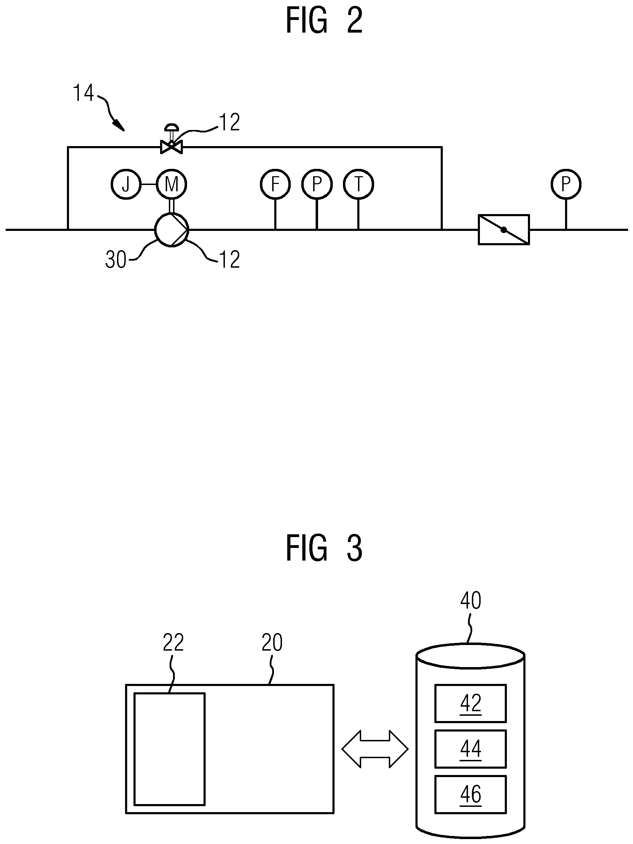

FIG 2 zeigt beispielhaft eine in dem Rohrleistungsschema 10 gemäß FIG 1 zu erkennende Struktur - vorliegend ein Pumpensystem mit einer Pumpe, einzelnen Messstellen, einem automatischen Regelventil in einem zu der Pumpe parallelen Rohleitungszweig sowie mit einer Klappe stromabwärts der Pumpe. Die zu erkennende Struktur ist ersichtlich selbst ein Rohrleitungsschema 10, nämlich ein Rohrleitungsschema 10 mit einzelnen die Struktur bestimmenden Komponenten 12 und einzelnen die Struktur ebenso bestimmenden Verbindungen zwischen den von der Struktur umfassten Komponenten 12. Die zu erkennende Struktur wird im Folgenden als Referenzschema 14 bezeichnet. Das Referenzschema 14 ist zum Beispiel ein Ausschnitt aus einem bestehenden Rohrleitungsschema 10, zum Beispiel ein Ausschnitt aus einem Rohrleitungsschema 10 einer bereits in Betrieb befindlichen Anlage.

Weil das Referenzschema 14 selbst ein - wenn auch "kleines" - Rohrleitungsschema 10 ist, wird im Folgenden das Rohrleitungsschema 10, in dem das Referenzschema 14 zu erkennen ist (im Beispiel das Rohrleitungsschema 10 in FIG 1) als Großschema 10 bezeichnet.

Einem menschlichen Betrachter fällt die Erkennung des Referenzschemas 14 gemäß FIG 2 in dem Großschema 10 gemäß FIG 1 vergleichsweise leicht. Nach dem hier vorgeschlagenen Ansatz soll eine solche Erkennung jedoch vollautomatisch mittels einer dafür vorgesehenen Erkennungseinrichtung 20 (FIG 3) erfolgen. Als Erkennungseinrichtung 20 kann ein Standard-Computer oder auch ein Computer-Netzwerk fungieren, zum Beispiel ein in der sogenannten Cloud erreichbares Computer-Netzwerk. Mittels der Erkennungseinrichtung 20 wird dafür ein gegebenenfalls verteiltes Computerprogramm 22 ausgeführt, welches eine Implementation des im Folgenden beschriebenen Verfahrens umfasst. Das Computerprogramm 22 ist in an sich bekannter Art und Weise in einen gegebenenfalls verteilten Speicher der Erkennungseinrichtung 20 geladen und wird - ebenfalls in grundsätzlich an sich bekannter Art und Weise - zum Erkennen eines Referenzschemas 14 in einem Großschema 10 mittels der Erkennungseinrichtung 20 und zumindest einer davon umfassten Verarbeitungseinheit in Form von oder nach Art eines Mikroprozessors ausgeführt.

Die automatische Erkennung des Referenzschemas 14 (oder eines grundsätzlich beliebigen Referenzschemas 14) in dem Großschema 10 (oder einem grundsätzlich beliebigen Großschema 10) geht von einer im Folgenden als Basiselement 30 bezeichneten Komponente 12 des Referenzschemas 14 aus. Als Basiselement 30 kommt grundsätzlich jede vom Referenzschema 14 umfasste Komponente 12 in Betracht. Bevorzugt wird als Basiselement 30 aber eine besonders charakteristische Komponente 12 ausgewählt, also eine Komponente 12, welche die Funktionalität des Referenzschemas 14 (mit-)bestimmt, und/oder eine Komponente 12, welche in dem Großschema 10 im Vergleich zu anderen Komponenten 12 seltener vorkommt.

Die Auswahl des Basiselements 30 kann automatisch erfolgen, zum Beispiel anhand einer Kodierung von Häufigkeiten, mit denen einzelne Komponenten 12 in einem Rohrleitungsschema 10 vorkommen. Die Auswahl des Basiselements 30 kann ebenso durch einen Anwender des hier vorgeschlagenen Verfahrens erfolgen. Als Basiselement 30 des Referenzschemas 14 in FIG 2 wird zum Beispiel die davon umfasste Pumpe ausgewählt.

Das Basiselement 30 des Referenzschemas 14 wird nun (automatisch und mittels der Erkennungseinrichtung 20) in dem Großschema 10 gesucht. Erkennbar umfasst das Großschema 10 vier Pumpen, also vier Komponenten 12, die als mit dem Basiselement 30 des Referenzschemas 14 übereinstimmend in Betracht kommen.

Die automatische Suche des Basiselements 30 in dem Großschema 10 basiert auf einer Suche nach einer Entsprechung eines das Basiselement 30 beschreibenden Datensatzes 32 in dem Großschema 10, nämlich der Gesamtheit der das Großschema 10 beschreibenden Datensätze. Eine solche Suche ist zum Beispiel dann vergleichsweise einfach möglich, wenn der das Basiselement 30 beschreibende Datensatz 32 und die das Großschema 10 beschreibenden Datensätze in demselben Formt vorliegen. Ein solches Format ist zum Beispiel ein Format, wie es in grundsätzlich an sich bekannter Art und Weise bei einer Kodierung eines Rohrleitungsschemas 10, einer Kodierung der davon umfassten Komponenten 12 und einer Kodierung der zwischen den Komponenten 12 bestehenden Verbindungen verwendet wird.

Die bei der beispielhaft gezeigten Situation gegebenen - und automatisch erkennbaren - vier Vorkommen des Basiselements 30 in dem Großschema 10 (Fundstellen) werden nun sukzessive automatisch untersucht. Jede Fundstelle bestimmt einen Ausgangspunkt für eine solche Untersuchung. Die Untersuchung bezieht sich insoweit auf einen von der jeweiligen Fundstelle ausgehenden oder die Fundstelle zumindest umfassenden Abschnitt des Großschemas 10. Ein solcher Abschnitt ist selbst wieder ein Rohrleitungsschema 10 und wird zur Unterscheidung als Kandidatenschema 34 bezeichnet, denn dieses kommt als eventuelle Entsprechung des Referenzschemas 14 in dem Großschema 10 in Betracht.

Der Umfang des Kandidatenschemas 34 kann im Verlauf des Verfahrens variieren. In der Darstellung in FIG 1 ist der Ort genau eines Kandidatenschemas 34 in dem Großschema 10 eingezeichnet. Der eingezeichnete Umfang des Kandidatenschemas 34 orientiert sich am Umfang des Referenzschemas 14.

Die nachfolgend beschriebenen Verfahrensschritte werden automatisch mittels und unter Kontrolle der Erkennungseinrichtung 20 durchgeführt. Darauf wird im Interesse einer besseren Lesbarkeit der weiteren Beschreibung nicht stets hingewiesen.

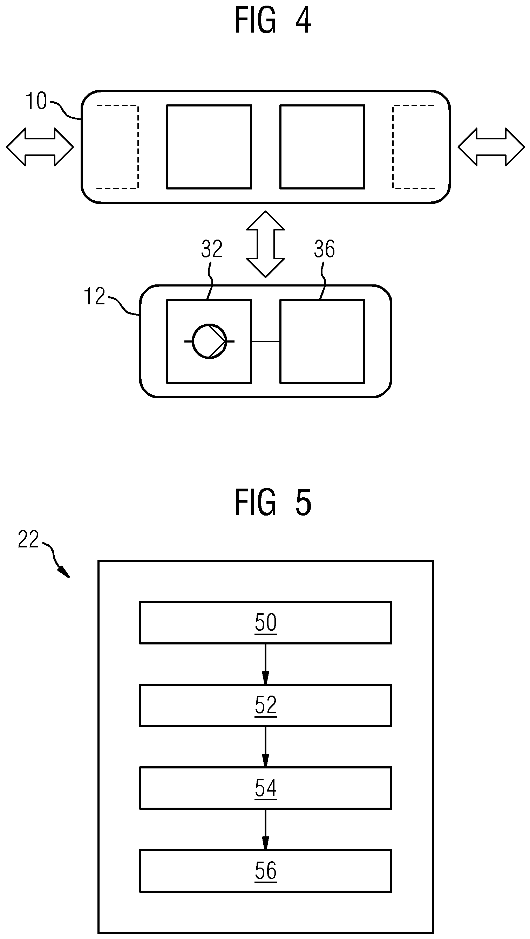

Bei der weiteren Erkennung werden der das Basiselement 30 beschreibende Datensatz 32 und zumindest ein diesem Datensatz 32 zugeordneter weiterer Datensatz 36 zugrunde gelegt. Der Datensatz 32 und der weitere Datensatz 36 sind schematisch vereinfacht in FIG 4 gezeigt. Der weitere Datensatz 36 beschreibt zum Beispiel zumindest eine neben dem Basiselement 30 vom Referenzschema 14 umfasste Komponente 12. Eine solche Beschreibung bezieht sich auf einen Typ einer jeweiligen Komponente 12 und/oder eine Position der jeweiligen Komponente 12 innerhalb des Referenzschemas 14. Beispielsweise beschreibt der weitere Datensatz 36 das in einem Parallelzweig zu der Pumpe befindliche Regelventil.

Bei den vier Vorkommen einer Pumpe in dem Großschema 10 besteht nur in einem Falle ein Parallelzweig. Bereits mit der Information "Parallelzweig" oder ansonsten mit der Information "Parallelzweig mit Regelventil" können drei der vier Vorkommen einer Pumpe in dem Großschema 10 als Kandidaten für eine Erkennung des Referenzschemas 14 ausgeschlossen werden. Hier ergibt sich dann bereits die Situation, dass ein vorgegebenes oder vorgebbares Maß an Übereinstimmung zwischen dem Referenzschema 14 und dem jeweiligen Kandidatenschema 34 nicht erreicht wird. Die Untersuchung des jeweiligen Kandidatenschemas 34 ist damit beendet und dieses kommt nicht als Ort für ein Vorkommen des Referenzschemas 14 in dem Großschema 10 in Betracht.

Eine Auswertung mittels der Erkennungseinheit 20, welche dies automatisch erkennt, also automatisch erkennt, ob zum Beispiel in dem Großschema 10 parallel zu einer Pumpe ein Zweig mit einem Regelventil besteht, basiert - grundsätzlich ebenso wie zuvor der im Rahmen der Suche des Basiselements 30 in dem Großschema 10 ausgeführte Vergleich - auf einem Vergleich des Datensatzes 32 und des weiteren Datensatzes 36 mit entsprechenden Daten, welche die Komponenten 12 und die zwischen den Komponenten 12 bestehenden Verbindungen des Großschemas 10 kodieren.

Sofern die Daten des Großschemas 10 und die bezüglich des Referenzschemas 14 betrachteten Daten, nämlich der Datensatz 32 sowie der weitere Datensatz 36, in einem geeigneten Format vorliegen, können diese direkt miteinander verglichen werden. Von einem solchen Format wird hier ausgegangen. Wenn die Daten nicht in einem solchen Format vorliegen, erfolgt zum Beispiel eine Umwandlung in ein solches Format.

Der Vergleich ist in schematisch stark vereinfachter Art und Weise in der Darstellung in FIG 4 gezeigt. Der vertikal orientierte Blockpfeil symbolisiert dabei den Vergleich zwischen den Daten des Großschemas 10 und den Daten des Referenzschemas 14. Die horizontal orientierten Blockpfeile symbolisieren, dass ausgehend von der jeweiligen Fundstelle zumindest ein Teil der Daten des Großschemas 10 berücksichtigt wird.

Der weitere Datensatz 36 beschreibt in einem automatisch auswertbaren, datentechnischen Format - wie oben vorausgesetzt - zum Beispiel, dass das Referenzschema 14 in einem zu der Pumpe parallelen Zweig ein Regelventil aufweist. Dies sind im Grunde zwei Informationen, welche das "Umfeld" des Basiselements 30 näher charakterisieren. In dem Beispiel ist die erste Information die Information, dass es parallel zur Pumpe eine weitere Rohrleitung gibt, und die zweite Information ist, dass es in diesem Parallelzweig ein Regelventil gibt. Grundsätzlich kann der weitere Datensatz 36 mehr oder weniger als solche Informationen umfassen, zum Beispiel lediglich die Information, dass es eine zu der Pumpe parallele weitere Rohrleitung gibt. Allgemein umfasst der weitere Datensatz 36 zumindest eine Information bezüglich zumindest einer weiteren Komponente 12 des Referenzschemas 14 und/oder bezüglich einer weiteren Rohrleitung innerhalb des Referenzschemas 14. Als Information bezüglich zumindest einer weiteren Komponente 12 des Referenzschemas 14 umfasst der weitere Datensatz 36 zum Beispiel die Information, wie die weitere Komponente 12 mit dem Basiselement 30 verknüpft und/oder verbunden ist und/oder mit dem Basiselement 30 zusammenwirkt.

Mit einem weiteren Datensatz 36 mit den exemplarisch genannten Informationen (Parallelzweig, Regelventil in dem Parallelzweig) kann bei dem gezeigten Beispiel (FIG 1, FIG 2) ein dem Referenzschema 14 zumindest ähnlicher Bestandteil in dem Großschema 10 identifiziert werden. Dieser ist in der Darstellung in FIG 1 mittels einer geschweiften Klammer hervorgehoben. Die "Reichweite" der Klammer ergibt sich dabei aus den bezüglich des Referenzschemas 14 betrachteten Informationen und umfasst die Pumpe und den Parallelzweig mit dem Regelventil, endet aber auch an den Enden des Parallelzweigs (weil gemäß der bisherigen Erläuterung nur die Pumpe und der Parallelzweig betrachtet wurden).

Je mehr Informationen der weitere Datensatz 36 bezüglich des Referenzschemas 14 umfasst, umso genauer kann ein dem Referenzschema 14 entsprechender Bestandteil in dem Großschema 10 erkannt werden. Diese eventuellen zusätzlichen Informationen kann der weitere Datensatz 36 oder zumindest ein nochmals weiterer Datensatz umfassen.

Die bisher beschriebene Suche und die dafür ausgeführten Vergleiche basieren auf dem Basiselement 30, nämlich dem das Basiselement 30 repräsentierenden Datensatz 32, einem weiteren Datensatz 36 und ggf. sukzessive hinzukommenden weiteren Datensätzen. Eine solche Suche kann mit einer gewissen Berechtigung als "lineare Suche" beschrieben werden, denn in jeweils einer Richtung kommen bei der Suche sukzessive weitere Informationen aus dem Referenzschema 14 hinzu. Es sei ausdrücklich darauf hingewiesen, dass dies nur eine Möglichkeit einer Suche in dem Großschema 10 ist. Genauso kann auch zunächst in dem Großschema 10 nach dem Basiselement 30 gesucht werden und sodann das Basiselement 30 sukzessive erweitert werden. Dann wird auch in einem nächsten Schritt wieder nach dem Basiselement 30 gesucht. Allerdings ist der Umfang des Basiselements 30 jetzt größer, weil weitere Informationen aus dem Referenzschema hinzugekommen sind. Solange das hinsichtlich seines Umfangs und seiner Detailtiefe stetig zunehmende Basiselement 30 weiter im Bereich der Fundstelle des ursprünglichen Basiselements 30 gefunden wird, kann dies fortgesetzt werden, bis schließlich eine Entsprechung von Basiselement 30 und Referenzschema 14 erreicht ist. Eine solche Suche ist eine rekursive Suche, denn es wird stets nach dem Basiselement 30 gesucht, dessen Umfang allerdings stetig zunimmt.

Mit den bisher beschriebenen Möglichkeiten ist eine Identifikation eines Bestandteils des Großschemas 10 identifizierbar, welcher genau dem Referenzschema 14 entspricht (Vergleich auf Identität). Bei einer vorteilhaften Ausführungsform des hier vorgeschlagenen Ansatzes soll es aber mit einem Vergleich auf Identität nicht sein Bewenden haben. Vielmehr soll auch die Möglichkeit bestehen, Bestandteile des Großschemas 10 als zu dem Referenzschema 14 passend zu erkennen, welche - kurz gefasst - dieselbe Funktion/Wirkungsweise oder zumindest grundsätzlich dieselbe Funktion/Wirkungsweise wie das Referenzschema 14 haben.

Für eine Funktion eines Abschnitts eines Großschemas 10 ist zum Beispiel unerheblich, ob eine Druckmessung vor oder hinter einer Verzweigungsstelle in dem Rohrleitungsschema 10 stattfindet. Genauso ist es zum Beispiel unerheblich, ob ein Ventil einen elektrischen oder hydraulischen Antrieb hat. Zur automatischen Berücksichtigung solcher und ähnlicher Aspekte ist für den in FIG 4 schematisch vereinfacht gezeigten Vergleich der Daten des Großschemas 10 mit den Daten des Referenzschemas 14 eine Berücksichtigung von in einer Datenbasis vorgehaltenem Expertenwissen 40 (FIG 3) vorgesehen. Dafür hat die Erkennungseinrichtung 20 in grundsätzlich an sich bekannter Art und Weise Zugriff auf die gegebenenfalls verteilte Datenbasis und das dortige Expertenwissen 40.

Das Expertenwissen 40 kodiert zum Beispiel, welche Informationen bei dem Vergleich (FIG 4) Bedeutung haben und welche Informationen keine Bedeutung haben. Dies kann zum Beispiel mittels entsprechend kodierter Typinformationen (Informationen zum Typ oder zu einer Typkategorie einer Komponente 12) erfolgen. Wenn anhand einer Typinformation erkennbar ist, dass es sich bei einer mit dieser Typinformation versehenen Komponente 12 um ein Ventil handelt, kann die Typinformation neben dieser "Basisinformation" (Ventil) noch die Antriebsart und/oder die Bauart und so weiter kodieren. In dem Expertenwissen 40 ist dann zum Beispiel hinterlegt, dass die Antriebsart unbedeutend ist. Die Berücksichtigung dieser Information aus dem Expertenwissen 40 ist zum Beispiel mittels einer sogenannten Maskierung der Typinformation realisiert.

Das Expertenwissen 40 kodiert zusätzlich oder alternativ zum Beispiel, welche Komponenten 12 bei dem Vergleich (FIG 4) bezüglich ihrer genauen Position zu berücksichtigen sind und welche Komponenten 12 gegebenenfalls positionsvariabel sind. Eine grundsätzlich positionsvariable Komponente ist zum Beispiel ein Drucksensor. Bei dem betrachteten Beispiel (FIG 2) ist es unerheblich, ob der Drucksensor in dem Rohrleitungszweig mit der Pumpe stromabwärts der Pumpe vor oder hinter dem Anschluss des Parallelzweigs mit dem Regelventil platziert ist. Genauso ist es unerheblich, ob der Drucksensor vor oder hinter einem Temperatursensor platziert ist und so weiter.

Dies (Relevanz eines Typs einer Komponente 12; Relevanz einer Position einer Komponente 12) ist in dem Expertenwissen 40 in Form von automatisch auswertbaren Regeln hinterlegt, nämlich in Form von zumindest einer Typregel 42 (FIG 3), welche die Relevanz eines Typs einer Komponente 12 kodiert, und/oder zumindest einer Positionsregel 44 (FIG 3), welche die Relevanz einer Position einer Komponente 12 kodiert.

Die Berücksichtigung des in Form von Typregeln 42 und/oder Positionsregeln 44 kodierten Expertenwissens 40 ermöglicht es im Rahmen des Vergleichs (FIG 4), auch abweichende Strukturen in dem Großschema 10 als "noch ausreichend gleich" mit dem Referenzschema 14 zu identifizieren.

Eine weitere, zusätzliche oder alternative Form einer Kodierung von Expertenwissen 40 besteht in Form von Regeln, welche abweichende Komponenten 12 und/oder zusätzliche oder fehlende Komponenten 12 berücksichtigen, also zum Beispiel numerisch bewerten. Gemäß entsprechender Regeln werden Punkte (Strafpunkte) vergeben, nämlich einem Punktekonto (Strafpunktekonto) hinzugefügt, wobei sich die jeweiligen Strafpunkte vor allem an der Art der jeweils betrachteten Komponente 12 orientieren. Die insoweit von dem Expertenwissen 40 umfassten Regeln werden entsprechend als Strafregeln 46 (FIG 3) bezeichnet.

Eine Strafregel 46 definiert zum Beispiel, dass eine im Referenzschema 14 nicht vorgesehene, aber im Großschema 10 vorhandene Messung (oder umgekehrt) - zum Beispiel mittels eines Drucksensors - irrelevant oder nur von untergeordneter Bedeutung ist. In einem solchen Fall führt die Auswertung einer entsprechenden Strafregel 46 dazu, dass einem beim Vergleich (FIG 4) berücksichtigten Strafpunktekonto keine Strafe oder nur eine geringe Strafe hinzugefügt wird. Die Strafe ist dabei numerisch in Form von Strafpunkten kodiert und bei einer irrelevanten Abweichung ist der Wert der dem Strafpunktekonto hinzugefügten Strafpunkte gleich 0, während bei einer Abweichung von untergeordneter Bedeutung der Wert der dem Strafpunktekonto hinzugefügten Strafpunkte zwischen 0 und einem vorgegebenen oder vorgebbaren niedrigen Wert (zum Beispiel 5 oder 10) liegt.

Genauso kann eine (andere) Strafregel 46 definieren, dass eine Abweichung in Form einer fehlenden oder zusätzlichen Komponente 12 von erheblicher Bedeutung ist. Mit einer solchen Strafregel 46 ist entsprechend ein hoher Strafpunktewert verbunden, zum Beispiel ein Wert zwischen 100 und 1.000. Eine Strafregel 46, welcher ein solcher hoher Strafpunktewert zugeordnet ist, berücksichtigt zusätzliche oder fehlende Komponenten 12 (im Referenzschema 14 oder im Großschema 10), welche einen entscheidenden Einfluss auf die jeweilige Funktion der jeweiligen Anlage oder eines Abschnitts der Anlage haben. Beispiele in dieser Hinsicht sind zusätzliche oder fehlende Pumpen, zusätzliche oder fehlende Wärmetauscher, zusätzliche oder fehlende Tanks und so weiter.

Mittels weiterer Strafregeln 46 werden Aspekte berücksichtigt, die hinsichtlich ihrer Relevanz zwischen den bisher genannten Fällen angesiedelt sind. In diesem Falle ist mit der jeweiligen Strafregel 46 ein Strafpunktewert verbunden, der sich an der jeweiligen Relevanz orientiert und entsprechend zwischen den zuvor beispielhaft genannten Werten liegt.

Beim Vergleich (FIG 4) und bei der Anwendung zumindest einer Strafregel 46 ergibt sich im Verlauf des Vergleichs ggf. ein zunehmender Wert eines bei dem Vergleich berücksichtigten Strafpunktekontos. Bei jedem von genau einer Fundstelle ausgehenden Vergleich startet das Strafpunktekonto mit einem vorgegebenen oder vorgebbaren Initialwert, zum Beispiel 0. Wenn das Strafpunktekonto einen vorgegebenen oder vorgebbaren Schwellwert erreicht oder überschreitet, wird der von dieser Fundstelle ausgehende Vergleich, also der Vergleich bezüglich des mit dieser Fundstelle verbundenen Kandidatenschemas 34, beendet. Der Schwellwert und ein mit einer Strafregel 46 verbundener hoher Strafpunktewert sind miteinander korreliert, insbesondere derart, dass ein hoher Strafpunktewert allein den Schwellwert erreicht oder überschreitet.

Ansonsten - oder auch ohne die grundsätzlich optionale Berücksichtigung der zumindest einen Strafregel 46 - ist der Vergleich (FIG 4) in Bezug auf eine Fundstelle beendet, wenn alle vom Referenzschema 14 umfassten Komponenten 12 berücksichtigt sind.

In Bezug auf eine Reihenfolge der Betrachtung der Komponenten orientiert sich der automatische Vergleich bevorzugt an der Struktur des Referenzschemas 14. Entsprechend einer daraus resultierenden möglichen Reihenfolge werden zum Beispiel ausgehend von dem Basiselement 30 zunächst die Komponenten 12 stromabwärts des Basiselements 30 und anschließend die Komponenten 12 stromaufwärts des Basiselements 30 betrachtet. Das beim Vergleich (FIG 4) erfolgende Voranschreiten einerseits im Referenzschema 14 und andererseits im Großschema 10 - dort ausgehend von der zuvor als zu dem Basiselement 30 passend identifizierten Komponente 12 - wird im Folgenden als Traversieren des Referenzschemas 14 und Traversieren des Großschemas 10 oder auch nur kurz als Traversieren bezeichnet.

Das Traversieren des Referenzschemas 14 erfolgt zunächst bis zu einer ersten Verzweigungsstelle. Synchron zu dem Traversieren des Referenzschemas 14 erfolgt ein entsprechendes Traversieren des Großschemas 10 und im Rahmen des Traversierens erfolgt der Vergleich (FIG 4) der dabei vorkommenden Komponenten 12.

Ausgehend von dieser ersten Verzweigungsstelle werden alle Komponenten 12 entlang einer von dieser ersten Verzweigungsstelle ausgehenden ersten Rohrleitung bis zu einer nächsten Verzweigungsstelle betrachtet (im Referenzschema 14 und im Großschema 10). Dann werden alle Komponenten 12 entlang einer von dieser weiteren Verzweigungsstelle ausgehenden ersten Rohrleitung bis zu einer nochmals nächsten Verzweigungsstelle betrachtet und so weiter. Wenn sich keine weiteren und noch nicht berücksichtigten Verzweigungsstellen ergeben, werden gewissermaßen "rückwärts" entlang der bisher besuchten Verzweigungsstellen jede weitere von dort ausgehende Rohrleitung und die dortigen Komponenten 12 betrachtet.

Ein solches Traversieren des Referenzschemas 14 und des Großschemas 10 ist ein rekursives Traversieren oder ist zumindest als rekursiver Algorithmus implementierbar. An jeder Verzweigungsstelle werden zunächst die erste von dort ausgehende Rohrleitung und deren Komponenten 12 bis zu einer nächsten Verzweigungsstelle betrachtet. Wenn eine solche Verzweigungsstelle existiert und diese noch nicht besucht/berücksichtigt wurde, wird das Traversieren mit dieser fortgesetzt, als ob es sich um die erste Verzweigungsstelle handeln würde (d.h. es werden jetzt die dortigen Komponenten 12 betrachtet) und so weiter. Ohne eine weitere Verzweigungsstelle wird das Traversieren mit jeder eventuell von der aktuellen Verzweigungsstelle ausgehenden Rohrleitung fortgesetzt. Dabei können weitere Verzweigungsstellen identifiziert werden, die eine Fortsetzung des Traversierens an dieser Stelle bewirken, als ob es sich bei der jeweiligen weiteren Verzweigungsstelle um die erste Verzweigungsstelle handeln würde. Wenn auf diese Weise alle von einer Verzweigungsstelle ausgehenden Rohrleitungen betrachtet wurden, kehrt die Suche zu der jeweils vorangehenden Verzweigungsstelle zurück und auch dort werden sukzessive alle von dieser Verzweigungsstelle ausgehenden Rohrleitungen betrachtet, und so weiter. Auf diese Weise werden schließlich alle möglichen Wege stromabwärts des Basiselements 30 beschritten (traversiert) und es werden dort alle relevanten Komponenten 12 berücksichtigt. Anschließend (oder auch in umgekehrter Reihenfolge) werden alle möglichen Wege stromaufwärts des Basiselements 30 beschritten (traversiert).

Ein solches Traversieren des Referenzschemas 14 und des Großschemas 10 erfolgt zum Beispiel nach einem Algorithmus der sogenannten Tiefensuche. Alternativ kann das Traversieren zum Beispiel auch nach einem Algorithmus der sogenannten Breitensuche erfolgen. Beim Traversieren wird das Expertenwissen 40 berücksichtigt.

Wenn das Expertenwissen 40 in Form von zumindest einer Strafregel 46 oder auch in Form von zumindest einer Strafregel 46 berücksichtigt wird, wird das beim Vergleich (FIG 4) berücksichtigte Strafpunktekonto während des Traversierens mit jeweils anfallenden Strafpunkten beaufschlagt. Wenn während des Traversierens das Strafpunktekonto den Schwellwert erreicht oder überschreitet, wird das Traversieren unmittelbar beendet und der Vergleich des Referenzschemas 14 ist an dieser Stelle des Großschemas 10 beendet.

Wenn das Strafpunktekonto unterhalb des Schwellwerts verbleibt und/oder aufgrund anderer in Form von Expertenwissen 40 kodierter Kriterien der Vergleich nicht vorzeitig beendet wird, ist in dem Großschema 10 ein dem Referenzschema 14 entsprechender Abschnitt erkannt.

Wenn ein solcher Vergleich - gleich ob mit positivem oder negativem Ergebnis - an einer Stelle des Großschemas 10 beendet ist, wird in gleicher Weise jedes weitere Vorkommen des Basiselements 30 in dem Großschema 10 betrachtet. Wenn alle dem Basiselement 30 entsprechenden Komponenten 12 des Großschemas 10 betrachtet sind, ist die Analyse insgesamt beendet.

Abschließend zeigt FIG 5 - in schematisch sehr stark vereinfachter Form - das Computerprogramm 22 (FIG 3) in Form eines Flussdiagramms.

In einem ersten Schritt 50 werden das Großschema 10 (oder zumindest ein Großschema 10) und das jeweilige Referenzschema 14 in einen Speicher der Erkennungseinrichtung 20 (FIG 3) geladen. In einem zweiten Schritt 52 werden in dem Referenzschema 14 zumindest eine von dem Referenzschema 14 umfasste Komponente 12 als Basiselement 30 ausgewählt und im Speicher der Erkennungseinrichtung 20 ein entsprechender Datensatz 32 (FIG 4) erzeugt. In einem dritten Schritt 54 wird das Basiselement 30 in dem Großschema 10 gesucht, wobei eine dabei resultierende Fundstelle einen Abschnitt des Großschemas 10 als Kandidatenschema 34 definiert. In einem vierten Schritt 56 wird das oder jedes Kandidatenschema 34 ausgehend von der jeweiligen Fundstelle des Basiselements 30 im Großschema 10 weiter untersucht. Dabei werden weitere Daten 36, 40 berücksichtigt, welche das Referenzschema 14 näher spezifizieren. Details dieses vierten Schritts 56 sind hier mit Rücksicht auf die Übersichtlichkeit der Darstellung nicht gezeigt und es wird auf die vorangehende Beschreibung verwiesen. Die Untersuchung in Bezug auf genau ein Kandidatenschema 34 ist beendet, wenn ein vorgegebenes oder vorgebbares Maß an Übereinstimmung erreicht ist oder nicht erreicht wird. Wenn im dritten Schritt 54 mehr als eine Fundstelle des Basiselements 30 identifiziert wurde, wird im Anschluss an den vierten Schritt 56 zum Beginn des vierten Schritts 56 verzweigt und es wird ein neues Kandidatenschema 34 untersucht. Alternativ kann im Anschluss an eine Ausführung des vierten Schritts 56 auch zum dritten Schritt 54 verzweigt werden und mittels einer erneuten Ausführung des dritten Schritts 54 ein neues Kandidatenschema 34 ermittelt werden, welches dann in einer anschließenden Ausführung des vierten Schritts 56 untersucht wird. Die Suche in dem Großschema 10 ist insgesamt beendet, wenn alle Fundstellen des Basiselements 30 im Großschema 10 berücksichtigt wurden.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Einzelne im Vordergrund stehende Aspekte der hier eingereichten Beschreibung lassen sich damit kurz wie folgt zusammenfassen: Angegeben wird ein Verfahren zur Erkennung eines Referenzschemas 14 innerhalb eines als Großschema 10 bezeichneten Rohrleitungsschemas 10, wobei in dem Referenzschema 14 zumindest eine von diesem umfasste Komponente 12 als Basiselement 30 ausgewählt wird, wobei das Basiselement 30 in dem Großschema 10 gesucht wird und eine dabei resultierende Fundstelle einen Abschnitt des Großschemas 10 als Kandidatenschema 34 definiert, wobei das oder jedes Kandidatenschema 34 ausgehend von der jeweiligen Fundstelle weiter untersucht wird und wobei weitere Daten 36, 40, welche das Referenzschema 14 näher spezifizieren, insbesondere Expertenwissen 40, berücksichtigt werden.

## Patentansprüche

1. Verfahren zur Erkennung einer Struktur innerhalb eines Rohrleitungsschemas (10),
wobei das Rohrleitungsschema (10) und die zu erkennende Struktur Komponenten (12) eines Rohrleitungsschemas (10) umfassen,
wobei das Rohrleitungsschema (10) als Großschema (10) und die Struktur als Referenzschema (14) bezeichnet werden,
wobei das Verfahren zumindest die folgenden Schritte umfasst:
in dem Referenzschema (14) wird zumindest eine von dem Referenzschema (14) umfasste Komponente (12) als Basiselement (30) ausgewählt,
das Basiselement (30) wird in dem Großschema (10) gesucht und eine dabei resultierende Fundstelle definiert einen Abschnitt des Großschemas (10) als Kandidatenschema (34),
das oder jedes Kandidatenschema (34) wird ausgehend von der jeweiligen Fundstelle des Basiselements (30) im Großschema (10) weiter untersucht,
wobei weitere Daten (36, 40), welche das Referenzschema (14) näher spezifizieren, berücksichtigt werden,
wobei die Untersuchung in Bezug auf genau ein Kandidatenschema (34) beendet ist, wenn ein vorgegebenes oder vorgebbares Maß an Übereinstimmung erreicht ist oder nicht erreicht wird und
wobei die Suche in dem Großschema (10) beendet ist, wenn alle Fundstellen des Basiselements (30) im Großschema (10) berücksichtigt wurden.

2. Verfahren nach Anspruch 1,
wobei als weitere Daten (36, 40), welche das Referenzschema (14) näher spezifizieren, ein mit dem Basiselement (30) verknüpfter Datensatz (36) verwendet wird,
wobei der Datensatz (36) zumindest eine weitere von dem Referenzschema (14) umfasste Komponente (12) spezifiziert und/oder Expertenwissen (40) umfasst.

3. Verfahren nach Anspruch 2,
wobei die weitere von dem Referenzschema (14) umfasste Komponente (12) mit dem Basiselement (30) verknüpft und/oder verbunden ist und/oder mit dem Basiselement (30) zusammenwirkt.

4. Verfahren nach Anspruch 2,
wobei das Expertenwissen (40) automatisch auswertbare Regeln (42, 44, 36) umfasst.

5. Verfahren nach Anspruch 2,
wobei das Expertenwissen (40) als automatisch auswertbare Regel (46) zumindest eine Strafregel (46) umfasst,
wobei jede Strafregel (46) Strafpunkte vorsieht, welche einem Strafpunktekonto zugeschlagen werden, wenn sich bei einer Auswertung der Strafregel (46) ergibt, dass eine durch die Strafregel (46) definierte Bedingung erfüllt ist, und
wobei die Untersuchung in Bezug auf genau ein Kandidatenschema (34) beendet ist, wenn das Strafpunktekonto einen vorgegebenen oder vorgebbaren Wert erreicht oder überschreitet.

6. Verfahren nach einem der vorangehenden Ansprüche,
wobei das Basiselement (30) sukzessive durch Hinzunahme jeweils zumindest einer weiteren, vom Referenzschema (14) umfassten Komponente (12) erweitert wird und
wobei das Basiselement (30) in dem Großschema (10) gesucht wird.

7. Verfahren nach Anspruch 6,
wobei das sukzessive erweiterte Basiselement (30) in dem Großschema (10) jeweils in einem zuvor identifizierten Kandidatenschema (34) oder im Umfeld eines zuvor identifizierten Kandidatenschemas (34) gesucht wird.

8. Computerprogramm (22), umfassend Befehle, welche bei der Ausführung des Computerprogramms (22) durch einen Computer (20) diesen veranlassen, die Schritte des Verfahrens nach einem der Ansprüche 1 bis 7 auszuführen.

9. Computerlesbares Speichermedium mit elektronisch auslesbaren Steuersignalen, die bei der Ausführung durch einen Computer (20) diesen veranlassen, die Schritte des Verfahrens nach einem der Ansprüche 1 bis 7 auszuführen.
